# EUROPÄISCHE PATENTSCHRIFT

(11) **EP 3 224 014 B1**
(45) Veröffentlichungstag und Bekanntmachung des Hinweises auf die Patenterteilung: **04.09.2019**
(21) Anmeldenummer: 15788057.6
(22) Anmeldetag: 03.11.2015
(51) Int. Cl.: B29C 45/14, B29K 105/08

(54) **VERFAHREN ZUR HERSTELLUNG EINES SPRITZGUSSBAUTEILS MIT EINEM AUS EINEM ORGANOBLECH BESTEHENDEN EINLEGER UND VORRICHTUNG ZUR DURCHFÜHRUNG DES VERFAHRENS**
METHOD FOR PRODUCING AN INJECTION-MOULDED COMPONENT WITH AN INLAY MADE OF AN ORGANO-SHEET AND DEVICE FOR CARRYING OUT THE METHOD
PROCÉDÉ DE FABRICATION D'UN COMPOSANT MOULÉ PAR INJECTION POURVU D'UN INSERT EN TÔLE ORGANIQUE ET DISPOSITIF POUR METTRE EN OEUVRE LE PROCÉDÉ

(30) Priorität: 26.11.2014 DE 102014224125
(43) Veröffentlichungstag der Anmeldung: 04.10.2017
(73) Patentinhaber: Bayerische Motoren Werke Aktiengesellschaft, 80809 München (DE)
(72) Erfinder: SCHWARZ, Manuel, 84028 Landshut (DE); KONRAD, Oleg, 84030 Ergolding (DE)
(86) Internationale Anmeldenummer: PCT/EP2015/075502
(87) Internationale Veröffentlichungsnummer: WO 2016/083082

(56) Entgegenhaltungen:
- EP-A1- 2 617 549
- DE-A1-102011 117 338
- DE-A1-102013 212 085
- JP-A- S59 202 830
- JP-A- 2009 034 954
- US-A1- 2007 007 690

## Beschreibung

Die Erfindung betrifft ein Verfahren zur Herstellung eines Spritzgussbauteils mit einem aus einem Organoblech bestehenden Einleger und, eine Vorrichtung zur Durchführung des Verfahrens.

Organobleche sind Faserverbundwerkstoffe, die gegenwärtig vor allem im Automobil- und Flugzeugbau eingesetzt werden. Weitere Potenziale bestehen bei der Fertigung von Frontends, Sitzen, Trägern und Pedalen.

Organobleche sind Faser-Matrix-Halbzeuge. Sie bestehen aus einem Fasergewebe oder einem Fasergelege, die in eine thermoplastische Kunststoffmatrix eingebettet sind. Die Vorteile einer thermoplastischen Matrix liegen in der Warmumformfähigkeit der Halbzeuge und den daraus resultierenden kürzeren Prozesszeiten im Vergleich zu konventionellen duroplastischen Faserverbundwerkstoffen. Dies ist besonders in der Automobilindustrie mit ihren kurzen Prozesszeiten von hohem Interesse. Häufig verwendete Faserwerkstoffe sind Glas, Aramid und Kohlenstoff (Carbon). Bei Geweben und Gelegen können die Fasern auch rechtwinklig zueinander verlaufen, so dass die mechanischen Eigenschaften von Organoblechen, wie Steifigkeit, Festigkeit und Wärmeausdehnung, besser als bei ihren metallischen Vorbildern definiert werden können. Im Gegensatz zu Metallblechen ist das Zug- und Druckverhalten sowie andere mechanische und thermische Eigenschaften nicht isotrop.

Bekannt sind konsolidierte Organoblech-Halbzeuge, die in einem separaten Schritt zunächst zu Einlegeteilen umgeformt, anschließend in ein Spritzgusswerkzeug eingelegt und dann um- bzw. überspritzt werden.

Des Weiteren ist aus der DE 10 2011 117 338 A1 ein Verfahren zur Herstellung eines Spritzgussbauteils mit einem aus einem Organoblech bestehenden Einleger mit folgenden Schritten bekannt:
- Bereitstellen eines auf einer Trägerschicht aufgebrachten, noch nicht konsolidierten Organoblechs,
- Einführen diese Organoblechs in eine Aufheizeinheit,
- Erwärmen des Abschnitts auf eine Temperatur oberhalb der Umformtemperatur,
- Einführen des erwärmtemn Abschnitts in ein geöffnetes Spritzgusswerkzeug, ohne den erwärmten Abschnitt von der Trägerschicht zu trenne, so dass automatisch ein weitere Abschnitt der Trägerschicht von der Rolle gezogen und in die Aufheizeinheit eingeführt wird,
- Schließen der Spritzgusseinheit,
- Herstellen des Spritzgussbauteils durch Umformen des abgetrennten Abschnitts und anschließendes um- bzw. überspritzen des umgeformten Abschnitts.

Ähnliche Verfahren sind auch aus der EP 2 617 549 A1 oder der DE 10 2013 212 085 A1 bekannt.

Die Dokumente JP S59 202830, JP 2009 034954 und US 2007/007690 offenbaren Einzelkomponenten von Spritzgussmaschinen.

Nachteilig bei konsolidierten Organoblech-Halbzeugen sind insbes. die hohen Kosten für die Halbzeuge, die schlechte Energiebilanz (zwei- bis dreimaliges Aufheizung zur Konsolidierung, Umformung und Aufheizung zum Um- bzw. Überspritzen nötig), die aufwändigen Handlingsvorrichtungen bei vielen bzw. großen Organoblechen, das notwendige Beschneiden der Organoblech- bzw. Bauteilbeschnitte und die notwendigen höheren Fertigungstoleranzen bei konsolidierten Organoblech-Einlegeteilen, um eine Beschädigung von Werkzeugen zu verhindern.

Ferner sind noch nicht konsolidierte Organobleche bekannt, die als Endlosware auf einer Rolle zur Verfügung stehen.

Es ist daher Aufgabe der vorliegenden Erfindung, ein Verfahren, eine Vorrichtung und ein Bauteil anzugeben, welches die Nachteile des Standes der Technik vermeidet, zumindest aber reduziert.

Diese Aufgabe wird gelöst durch ein Verfahren zur Herstellung eines Spritzgussbauteils mit einem aus einem Organoblech bestehenden Einleger mit folgenden Schritten:
- Bereitstellen eines auf einer Rolle aufgewickelten, noch nicht konsolidierten Endlos-Organoblechs,
- Abziehen eines vorderen Abschnitts des Endlos-Organoblechs von der Rolle und Einführen dieses Abschnitts in eine Aufheizeinheit,
- Erwärmen des Abschnitts auf eine Temperatur oberhalb der Umformtemperatur,
- Einführen des erwärmten Abschnitts in ein geöffnetes Spritzgusswerkzeug, ohne den erwärmten Abschnitt von dem Endlos-Organoblech zu trennen, so dass automatisch ein weiterer Abschnitt des Endlos-Organoblechs von der Rolle gezogen und in die Aufheizeinheit eingeführt wird,
- Schließen des Spritzgusswerkzeugs und gleichzeitiges Abtrennen des erwärmten Abschnitts von dem Endlos-Organoblech,
- Herstellen des Spritzgussbauteils durch Umformen des abgetrennten Abschnitts und anschließendes um- bzw. überspritzen des umgeformten Abschnitts.

Mithilfe des erfindungsgemäßen Verfahrens können die hohen Kosten für die Halbzeuge verringert werden, da nicht konsolidiertes Material verwendet wird. Die Energiebilanz wird verbessert, da nur ein einmaliges Aufheizen zur Konsolidierung, zur Umformung und zum Spritzgussvorgang erforderlich ist. Die aufwändigen Handlingsvorrichtungen bei vielen bzw. großen Organoblechen sowie die notwendigen höheren Fertigungstoleranzen bei konsolidierten Organoblech-Einlegeteilen können entfallen.

Die Unteransprüche beinhalten vorteilhafte Weiterbildungen und Ausgestaltungen der Erfindung.

Gemäß einer bevorzugten Weiterbildung wird der erwärmte Abschnitt vor bzw. während des Einführens in ein geöffnetes Spritzgusswerkzeug von dem Endlos-Organoblech abgetrennt.

Gemäß einer vorteilhaften Weiterbildung wird der erwärmte Abschnitt durch das Umformen weiter in das Spritzgusswerkzeug hinein gezogen, so dass die Schnittkante nicht mehr im Bereich der Bauteilkante des fertigen Spritzgussbauteils liegt.

Gemäß einer bevorzugten Ausgestaltung erfolgt das Umformen des abgetrennten Abschnitts mittels eines Voreilers, der zum Umformen in das Spritzgusswerkzeug einfährt und nach erfolgtem Umformprozess das Spritzgusswerkzeug wieder verlässt, um in dem Spritzgusswerkzeug einen Hohlraum für den Spritzgussprozess zu bilden.

Die erfindungsgemäße Aufgabe wird weiterhin gelöst durch eine Vorrichtung zur Herstellung eines Spritzgussbauteils mit einem aus einem Organoblech bestehenden Einleger, aufweisend
- eine Aufnahme für eine Rolle, auf der ein noch nicht konsolidiertes Endlos-Organoblech aufgewickelt ist,
- eine Aufheizeinheit,
- einen Greifer zum Abziehen eines vorderen Abschnitts des Endlos-Organoblechs von der Rolle und zum Einführen in die Aufheizeinheit,
- ein Spritzgusswerkzeug,
- einen Spannrahmen zum Einführen des erwärmten Abschnitts in das Spritzgusswerkzeug, und
- eine Schneideinheit, die zwischen der Aufheizeinheit und dem Spritzgusswerkzeug angeordnet ist.

Die Unteransprüche beinhalten vorteilhafte Weiterbildungen und Ausgestaltungen der Erfindung.

Gemäß einer vorteilhaften Weiterbildung ist zum Umformen des abgetrennten Abschnitts des Endlos-Organoblechs ein Voreiler vorgesehen, der bezüglich des Spritzgusswerkzeugs ein- und ausfahrbar ist.

Weitere Einzelheiten, Merkmale und Vorteile der Erfindung ergeben sich aus der nachfolgenden Beschreibung anhand der Zeichnungen. Es zeigen:

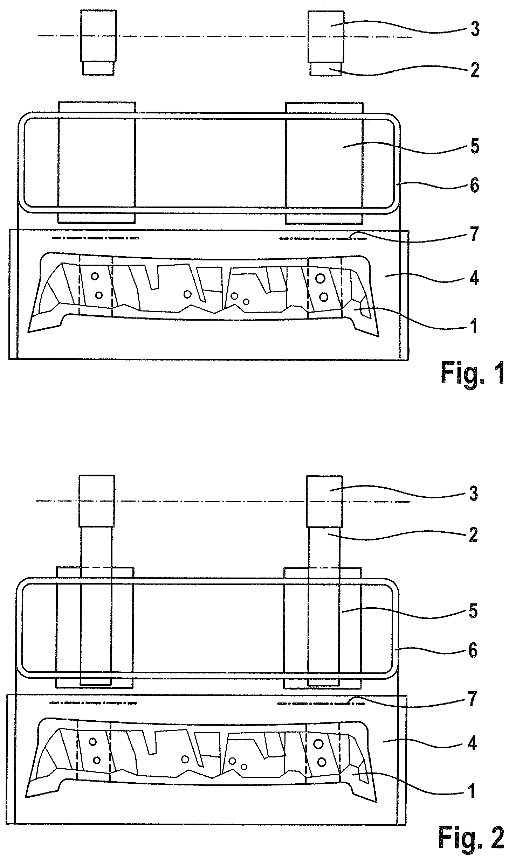

- Figuren 1 bis 6: die verschiedenen Schritte des erfindungsgemäßen Verfahrens

Figur 1 zeigt die Ausgangssituation eines Verfahrens zur Herstellung eines Spritzgussbauteils 1 mit einem aus einem Organoblech 2 bestehenden Einleger, wobei im beschriebenen Ausführungsbeispiel das Spritzgussbauteil 1 mit zwei Einlegern aus Organoblech versehen wird. Die Einleger sind Teil eines noch nicht konsolidierten Endlos-Organoblechs, das auf einer Rolle 3 aufgewickelt und vor dem eigentlichen Spritzgusswerkzeug 4 bereitgestellt ist.

Zwischen dem Spritzgusswerkzeug 4 und der Rolle 3 ist eine Aufheizstation 5 angeordnet.

In einem ersten Verfahrensschritt wird mittels eines nicht dargestellten Greifers ein vorderer Abschnitt des Endlos-Organoblechs von der Rolle 3 abgezogen und in die Aufheizeinheit 5 eingeführt. Dies ist in Figur 2 gezeigt.

In der Aufheizeinheit 5 wird der in der Aufheizeinheit 5 befindliche Abschnitt des Organoblechs 2 auf eine Temperatur aufgeheizt, welche oberhalb der Umformtemperatur des Organoblechs 2 liegt.

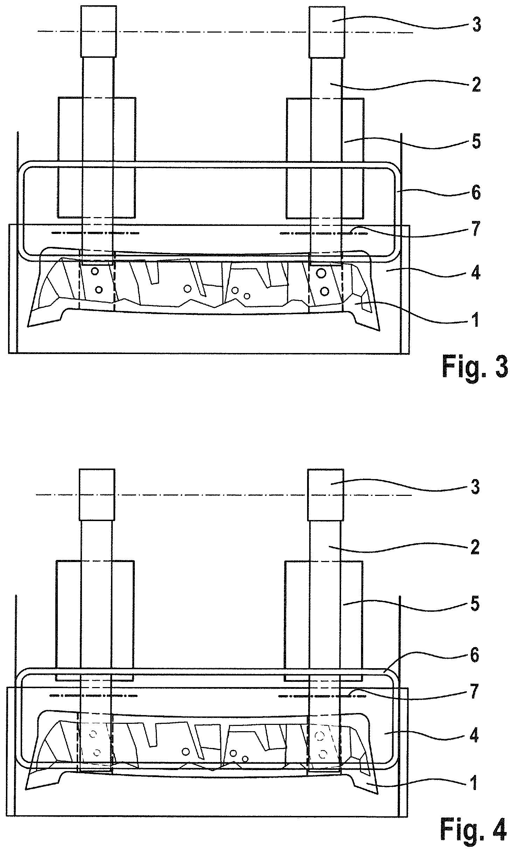

Nach Beendigung der Aufheizphase wird der in der Aufheizeinheit 5 befindliche Abschnitt des Organoblechs 2 von einem Spannrahmen 6 übernommen und in Richtung des zu diesem Zeitpunkt geöffneten Spritzgusswerkzeugs 4 transportiert. Dabei ist der in der Aufheizeinheit 5 befindliche Abschnitt des Organoblechs 2 immer noch mit dem auf der Rolle 3 befindlichen Endlos-Organoblech verbunden, so dass beim Transport des in der Aufheizeinheit 5 befindliche Abschnitts automatisch ein weiterer Abschnitt des Endlos-Organoblechs von der Rolle 3 abgezogen und in die Aufheizeinheit 5 eingeführt wird. Dies ist in den Figuren 3 bis 5 gezeigt.

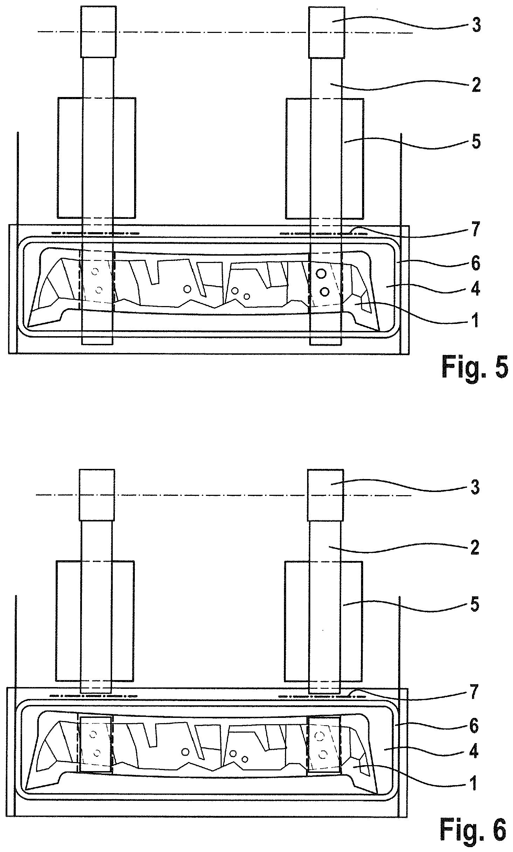

Wenn der in Figur 5 gezeigte Zustand, in dem sich der Einleger 2 vollständig in dem Spritzgusswerkzeug 4 befindet, erreicht ist, wird das Spritzgusswerkzeug 4 geschlossen. Gleichzeitig wird eine zwischen dem Spritzgusswerkzeug 4 und der Aufheizeinheit 5 angeordnete Schneideinheit 7 betätigt, welche den in dem Spritzgusswerkzeug 4 befindlichen Abschnitt des Organoblechs 2 von dem Endlos-Organoblech abtrennt. Dies ist in Figur 6 gezeigt. Alternativ kann der erwärmte Abschnitt vor bzw. während des Einführens in ein geöffnetes Spritzgusswerkzeug von dem Endlos-Organoblech abgetrennt werden.

Anschließend wird zunächst der in dem Spritzgussbauteil 1 befindliche Abschnitt des Organoblechs 2 zu dem Einleger umgeformt bzw. konsolidiert, danach wird der Einleger zur Herstellung des Spritzgussbauteils 1 um- bzw. überspritzt.

Nach dem Öffnen des Spritzgusswerkzeugs 4 und dem Entfernen des fertigen Spritzgussbauteils 1 kann der beschriebene Herstellungsprozess von neuem beginnen, indem ein bereits erwärmter Abschnitt von der Aufheizstation 5 in das Spritzgusswerkzeug 4 gezogen wird.

Damit die Schnittkante des Organoblechs 2 nicht mehr im Bereich der Bauteilkante des fertigen Spritzgussbauteils 1 liegt, wird der erwärmte Abschnitt beim Umformen weiter in das Spritzgusswerkzeug 4 hinein gezogen, wie in Figur 6 zu sehen ist.

Das Umformen des in dem Spritzgusswerkzeug 4 befindlichen Abschnitts des Organoblechs 2 zu dem Einleger erfolgt mittels eines nicht dargestellten Voreilers, der zum Umformen in das Spritzgusswerkzeug 4 einfährt und nach erfolgtem Umformprozess das Spritzgusswerkzeug 4 wieder verlässt, um in dem Spritzgusswerkzeug 4 einen Hohlraum für den Spritzgussprozess zu bilden.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen.

### Bezugszeichenliste

- 1: Spritzgussbauteil
- 2: Organoblech
- 3: Rolle
- 4: Spritzgusswerkzeug
- 5: Aufheizeinheit
- 6: Spannrahmen
- 7: Schneideinheit

## Patentansprüche

1. Verfahren zur Herstellung eines Spritzgussbauteils (1) mit einem aus einem Organoblech (2) bestehenden Einleger mit folgenden Schritten:
- Bereitstellen eines auf einer Rolle (3) aufgewickelten, noch nicht konsolidierten Endlos-Organoblechs,
- Abziehen eines vorderen Abschnitts des Endlos-Organoblechs von der Rolle (3) und Einführen dieses Abschnitts in eine Aufheizeinheit (5),
- Erwärmen des Abschnitts auf eine Temperatur oberhalb der Umformtemperatur,
- Einführen des erwärmten Abschnitts in ein geöffnetes Spritzgusswerkzeug (4), ohne den erwärmten Abschnitt von dem Endlos-Organoblech zu trennen, so dass automatisch ein weiterer Abschnitt des Endlos-Organoblechs von der Rolle (3) gezogen und in die Aufheizeinheit (6) eingeführt wird,
- Schließen des Spritzgusswerkzeugs (4) und gleichzeitiges Abtrennen des erwärmten Abschnitts von dem Endlos-Organoblech,
- Herstellen des Spritzgussbauteils (1) durch Umformen des abgetrennten Abschnitts und anschließendes um- bzw. überspritzen des umgeformten Abschnitts.

2. Verfahren nach Anspruch 1, wobei der erwärmte Abschnitt vor bzw. während des Einführens in ein geöffnetes Spritzgusswerkzeug von dem Endlos-Organoblech abgetrennt wird.

3. Verfahren nach Anspruch 1, wobei der erwärmte Abschnitt durch das Umformen weiter in das Spritzgusswerkzeug (4) hinein gezogen wird, so dass die Schnittkante nicht mehr im Bereich der Bauteilkante des fertigen Spritzgussbauteils (1) liegt.

4. Verfahren nach Anspruch 2 oder 3, wobei das Umformen des abgetrennten Abschnitts mittels eines Voreilers erfolgt, der zum Umformen in das Spritzgusswerkzeug (4) einfährt und nach erfolgtem Umformprozess das Spritzgusswerkzeug (4) wieder verlässt, um in dem Spritzgusswerkzeug (4) einen Hohlraum für den Spritzgussprozess zu bilden.

5. Vorrichtung zur Herstellung eines Spritzgussbauteils (1) mit einem aus einem Organoblech (2) bestehenden Einleger, aufweisend
- eine Aufnahme für eine Rolle (3), auf der ein noch nicht konsolidiertes Endlos-Organoblech aufgewickelt ist,
- eine Aufheizeinheit (5),
- einen Greifer zum Abziehen eines vorderen Abschnitts des Endlos-Organoblechs von der Rolle (3) und zum Einführen in die Aufheizeinheit (5),
- ein Spritzgusswerkzeug (4),
- einen Spannrahmen (6) zum Einführen des erwärmten Abschnitts in das Spritzgusswerkzeug (4), und
- eine Schneideinheit (7), die zwischen der Aufheizeinheit (5) und dem Spritzgusswerkzeug (4) angeordnet ist.

6. Vorrichtung nach Anspruch 5, wobei zum Umformen des abgetrennten Abschnitts des Endlos-Organoblechs ein Voreiler vorgesehen ist, der bezüglich des Spritzgusswerkzeugs (4) ein- und ausfahrbar ist.

## Claims

1. A method for producing an injection-moulded component (1) with an inlay comprising an organo-sheet (2), having the following steps:
- providing an endless organo-sheet which is not yet consolidated wound on a roll (3),
- drawing off a front portion of the endless organo-sheet from the roll (3) and introducing this portion into a heating unit (5),
- heating the portion to a temperature above the forming temperature,
- introducing the heated portion into an opened injection mould (4), without severing the heated portion from the endless organo-sheet, so that automatically a further portion of the endless organo-sheet is drawn from the roll (3) and introduced into the heating unit (6),
- closing the injection mould (4) and simultaneously separating the heated portion from the endless organo-sheet,
- producing the injection-moulded component (1) by forming the portion separated off and then encapsulating or overmoulding the formed portion.

2. A method according to Claim 1, wherein the heated portion prior to or during the introduction into an opened injection mould is separated off from the endless organo-sheet.

3. A method according to Claim 1, wherein the heated portion by the forming is drawn further into the injection mould (4), so that the cut edge no longer lies in the region of the component edge of the finished injection-moulded component (1).

4. A method according to Claim 2 or Claim 3, wherein the forming of the portion separated off takes place by means of an advance tool which for forming enters into the injection mould (4) and once the forming process has taken place leaves the injection mould (4) again in order to form a cavity for the injection-moulding process in the injection mould (4).

5. A device for producing an injection-moulded component (1) with an inlay comprising an organo-sheet (2), having
- a receptacle for a roll (3) on which an endless organo-sheet which is not yet consolidated is wound,
- a heating unit (5),
- a gripper for pulling off a front portion of the endless organo-sheet from the roll (3) and for introducing into the heating unit (5),
- an injection mould (4),
- a clamping frame (6) for introducing the heated portion into the injection mould (4), and
- a cutting unit (7) which is arranged between the heating unit (5) and the injection mould (4).

6. A device according to Claim 5, wherein for forming the separated off portion of the endless organo-sheet an advance tool is provided which can be moved in and out with respect to the injection mould (4).

## Revendications

1. Procédé d'obtention d'un composant moulé par injection (1) ayant un insert réalisé en une tôle organique (2) comprenant les étapes suivantes consistant à :
- se procurer une tôle organique sans fin pas encore consolidée enroulée sur un rouleau (3),
- dérouler un segment avant de la tôle organique sans fin du rouleau (3) et introduire ce segment dans une unité de chauffage (5),
- chauffer le segment à une température supérieure à la température de mise en forme,
- introduire le segment réchauffé dans un outil de moulage par injection (4) ouvert sans séparer le segment réchauffé de la tôle organique sans fin de sorte qu'un autre segment de la tôle organique sans fin soit automatiquement déroulé du rouleau (3) et introduit dans l'unité de chauffage (6),
- fermer l'outil de moulage par injection (4) et séparer simultanément le segment réchauffé de la tôle organique sans fin,
- fabriquer le composant moulé par injection (1) par mise en forme du segment séparé puis effectuer une injection autour ou sur du segment mis en forme.

2. Procédé conforme à la revendication 1,
selon lequel, le segment réchauffé est séparé de la tôle organique sans fin avant ou pendant son introduction dans l'outil de moulage par injection ouvert.

3. Procédé conforme à la revendication 1,
selon lequel, le segment réchauffé est davantage tiré dans l'outil de moulage par injection (4) par la mise en forme de sorte que l'arête découpée ne soit plus située dans la zone de l'arête du composant moulé par injection (1) final.

4. Procédé conforme à la revendication 2 ou 3,
selon lequel, la mise en forme du segment séparé est effectuée au moyen d'un organe d'avancement qui pénètre dans l'outil de moulage par injection (4) pour permettre la mise en forme et, quitte à nouveau cet outil de moulage par injection (4) lorsque le processus de mise en forme a été effectué pour former dans l'outil de moulage par injection (4) une cavité pour le processus de moulage par injection.

5. Dispositif d'obtention d'un composant moulé par injection (1) avec un insert réalisé à partir d'une tôle organique (2) comprenant :
- un logement de réception d'un rouleau (3) sur lequel est enroulée une tôle organique sans fin par encore consolidée,
- une unité de chauffage (5),
- un organe de préhension permettant de dérouler un segment avant de la tôle organique sans fin du rouleau (3) et de l'introduire dans l'unité de chauffage (5),
- un outil de moulage par injection (4),
- un cadre de serrage (6) permettant d'introduire le segment réchauffé dans l'outil de moulage par injection (4), et
- une unité de coupe (7) qui est installée entre l'unité de chauffage (5) et l'outil de moulage par injection (4).

6. Dispositif conforme à la revendication 5,
dans lequel, pour permettre la mise en forme du segment séparé de la tôle organique sans fin, il est prévu un organe d'avancement qui peut être introduit dans et extrait de l'outil de moulage par injection (4).
